# EUROPEAN PATENT APPLICATION

(11) **EP 4 564 224 A1**
(43) Date of publication of application: **04.06.2025**
(21) Application number: 23856038.7
(22) Date of filing: 15.03.2023
(51) Int. Cl.: G06N 3/04

(54) **NEURAL ARCHITECTURE SEARCH METHOD AND DEVICE, AND STORAGE MEDIUM**

(30) Priority: 25.08.2022 CN 202211026784
(71) Applicant: Huawei Cloud Computing Technologies Co., Ltd., Guiyang, Guizhou 550025 (CN)
(72) Inventor: TIAN, Qi, Guiyang, Guizhou 550025 (CN); YIN, Haoran, Beijing 100190 (CN); PENG, Junran, Guiyang, Guizhou 550025 (CN); XIE, Lingxi, Guiyang, Guizhou 550025 (CN); ZHANG, Zhaoxiang, Beijing 100190 (CN)
(74) Representative: Isarpatent
(86) International application number: PCT/CN2023/081678
(87) International publication number: WO 2024/040941

(57) **Abstract**

This application relates to the field of artificial intelligence, and in particular, to a neural architecture search method and apparatus, and a storage medium. The method includes: obtaining a target constraint, where the target constraint indicates a model scale defined by a target instance for running a neural network model; obtaining a plurality of pre-trained first neural network models based on search space, where the search space indicates correspondences between a plurality of model scales and the plurality of first neural network models, respective model architecture parameters of the plurality of first neural network models are different, and the model architecture parameter indicates a ratio between at least two neural network architectures in the first neural network model; and selecting, from the plurality of first neural network models, a target neural network model that meets the target constraint. According to the solutions provided in embodiments of this application, under the target constraint of the defined model scale, an ideal hybrid neural network architecture can be automatically found, to improve a neural architecture search effect.

## Description

This application claims priority to Chinese Patent Application No. 202211026784.6, filed with the China National Intellectual Property Administration on August 25, 2022 and entitled "NEURAL ARCHITECTURE SEARCH METHOD AND APPARATUS, AND STORAGE MEDIUM", which is incorporated herein by reference in its entirety.

### TECHNICAL FIELD

This application relates to the field of artificial intelligence (artificial intelligence, AI), and in particular, to a neural architecture search method and apparatus, and a storage medium.

### BACKGROUND

With rapid development of AI technologies, various neural network models emerge one after another. Performance of a neural network architecture has important impact on a task execution effect of a neural network model. Better performance of the neural network architecture indicates a better task execution effect of the neural network model. Therefore, for constructing a neural network model, how to determine a neural network architecture with good performance is a research hotspot of a person skilled in the art.

A neural architecture search (neural architecture search, NAS) technology emerges accordingly. The NAS technology can automatically find a neural network architecture with optimal performance in predefined search space. However, when a model scale is given, performance of different neural network architectures is inconsistent. For example, at a large model scale, a transformer structure has better performance than a convolutional neural network (convolutional neural network, CNN). For another example, at a small model scale, a CNN has better performance than a transformer structure. This indicates that, under a specific constraint of a given model scale, it is difficult to determine which neural network architecture should be used to design an ideal neural network architecture that meets the current constraint. A reasonable and effective implementation has not been provided in a related technology.

### SUMMARY

In view of this, a neural architecture search method and apparatus, and a storage medium are provided. Search space is pre-constructed, where the search space indicates correspondences between a plurality of model scales and a plurality of first neural network models, respective model architecture parameters of the plurality of first neural network models are different, and the model architecture parameter indicates a ratio between at least two neural network architectures in the first neural network model. In this way, under a target constraint of a defined model scale, a target neural network model that meets the current target constraint can be determined, that is, an ideal hybrid neural network architecture is automatically found, to improve a neural architecture search effect.

According to a first aspect, an embodiment of this application provides a neural architecture search method. The method includes:
obtaining a target constraint, where the target constraint indicates a model scale defined by a target instance for running a neural network model;
obtaining a plurality of pre-trained first neural network models based on search space, where the search space indicates correspondences between a plurality of model scales and the plurality of first neural network models, respective model architecture parameters of the plurality of first neural network models are different, and the model architecture parameter indicates a ratio between at least two neural network architectures in the first neural network model; and
selecting, from the plurality of first neural network models, a target neural network model that meets the target constraint.

In this implementation, in this embodiment of this application, the search space is pre-constructed, where the search space indicates the correspondences between the plurality of model scales and the plurality of first neural network models, the respective model architecture parameters of the plurality of first neural network models are different, and the model architecture parameter indicates the ratio between the at least two neural network architectures in the first neural network model, so that under the target constraint of the defined model scale, the target neural network model that meets the current target constraint can be automatically found from the plurality of first neural network models, that is, an ideal hybrid neural network architecture and a ratio between at least two hybrid neural network architectures are found, to improve a neural architecture search effect.

In a possible implementation, the selecting, from the plurality of first neural network models, a target neural network model that meets the target constraint includes:
selecting, from the plurality of first neural network models, at least two second neural network models that meet the target constraint;
training the at least two second neural network models in a target dataset corresponding to a target task, to obtain evaluation parameters respectively corresponding to the at least two second neural network models, where the evaluation parameter indicates a matching degree between the second neural network model and the target task; and
determining the target neural network model based on the evaluation parameters respectively corresponding to the at least two second neural network models.

In this implementation, after the at least two second neural network models that meet the target constraint are selected from the plurality of first neural network models, the at least two second neural network models are trained in the target dataset corresponding to the target task, to obtain the evaluation parameters respectively corresponding to the at least two second neural network models, and the target neural network model is determined based on the evaluation parameters respectively corresponding to the at least two second neural network models. To be specific, under the target constraint of a defined model scale, an optimal combination, namely, the target neural network model, at the model scale can be automatically found through one time of training, to further improve neural architecture search efficiency.

In another possible implementation, before the obtaining a plurality of pre-trained first neural network models based on search space, further including:
obtaining the search space of a super-network, where the super-network includes a plurality of neural network models that share respective model architecture parameters, and the search space further indicates that some neural network models in the super-network are the plurality of first neural network models.

In this implementation, the search space of the super-network is constructed, where the super-network includes the plurality of neural network models that share the respective model architecture parameters, and the search space further indicates that some neural network models in the super-network are the plurality of first neural network models, so that neural architecture search is subsequently performed based on the plurality of first neural network models indicated by the search space, to further improve neural architecture search efficiency.

In another possible implementation, the at least two neural network architectures include a CNN structure and a transformer structure.

In this implementation, the first neural network model in this solution includes two branches: a CNN branch and a transformer branch, to implement a search method for a hybrid neural network architecture including the CNN structure and the transformer structure.

In another possible implementation, before the obtaining a plurality of pre-trained first neural network models based on search space, further including:
obtaining a plurality of preset original neural network models, where the original neural network model indicates the at least two neural network architectures and the ratio between the at least two neural network architectures; and
training the plurality of original neural network models based on a training sample set, to obtain the plurality of trained first neural network models, where the training sample set includes a plurality of sample images.

In this implementation, the plurality of preset original neural network models are obtained, where the original neural network model indicates the at least two neural network architectures and the ratio between the at least two neural network architectures. The plurality of original neural network models are trained based on the training sample set, to obtain the plurality of trained first neural network models. A training policy of a hybrid neural network model, namely, the first neural network model, is constructed, so that model training efficiency can be greatly improved.

In another possible implementation, the training the plurality of original neural network models based on a training sample set, to obtain the plurality of trained first neural network models includes:
determining a sampled model from the plurality of original neural network models based on a preset sampling periodicity; and
for at least one sample image in the training sample set, training, based on the at least one sample image, the currently determined sampled model to obtain a corresponding first neural network model.

In this implementation, the sampled model is determined from the plurality of original neural network models based on the preset sampling periodicity, and for the at least one sample image in the training sample set, the currently determined sampled model is trained based on the at least one sample image, to obtain the corresponding first neural network model, to ensure reliability of the first neural network model obtained through training based on the sampled model.

In another possible implementation, the sampled model is a model with a largest model scale in the plurality of original neural network models, a model with a smallest model scale in the plurality of original neural network models, or a model randomly determined from the plurality of original neural network models.

In this implementation, the sampled model is the model with the largest model scale in the plurality of original neural network models, the model with the smallest model scale in the plurality of original neural network models, or the model randomly determined from the plurality of original neural network models, to further ensure reasonability and validity of model training.

According to a second aspect, an embodiment of this application provides a neural architecture search apparatus. The apparatus includes:
a processor; and
a memory, configured to store instructions executable by the processor.

The processor is configured to implement the foregoing method.

According to a third aspect, an embodiment of this application provides a neural architecture search apparatus. The apparatus includes:
a first obtaining unit, configured to obtain a target constraint, where the target constraint indicates a model scale defined by a target instance for running a neural network model;
a second obtaining unit, configured to obtain a plurality of pre-trained first neural network models based on search space, where the search space indicates correspondences between a plurality of model scales and the plurality of first neural network models, respective model architecture parameters of the plurality of first neural network models are different, and the model architecture parameter indicates a ratio between at least two neural network architectures in the first neural network model; and
a selection unit, configured to select, from the plurality of first neural network models, a target neural network model that meets the target constraint.

According to a fourth aspect, an embodiment of this application provides a non-volatile computer-readable storage medium. The non-volatile computer-readable storage medium stores computer program instructions, and when the computer program instructions are executed by a processor, the method provided in any one of the foregoing first aspect or the possible implementations of the first aspect is implemented.

According to a fifth aspect, an embodiment of this application provides a computer program product. The computer program product includes computer-readable code or a non-volatile computer-readable storage medium carrying the computer-readable code. When the computer-readable code is run in a computing device, a processor in the computing device performs the method provided in any one of the foregoing first aspect or the possible implementations of the first aspect.

According to a sixth aspect, an embodiment of this application provides a computing device cluster, including at least one computing device. Each computing device includes a processor and a memory. The processor of the at least one computing device is configured to execute instructions stored in the memory of the at least one computing device, to enable the computing device cluster to perform the method provided in any one of the foregoing first aspect or the possible implementations of the first aspect.

According to a seventh aspect, an embodiment of this application provides a computer program product including instructions. When the instructions are run by a computing device cluster, the computing device cluster is enabled to perform the method provided in any one of the foregoing first aspect or the possible implementations of the first aspect.

According to an eighth aspect, an embodiment of this application provides a computer-readable storage medium, including computer program instructions. When the computer program instructions are executed by a computing device cluster, the computing device cluster performs the method provided in any one of the foregoing first aspect or the possible implementations of the first aspect.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a diagram of a structure of a computing device according to an example embodiment of this application;
FIG. 2 is a flowchart of a neural architecture search method according to an example embodiment of this application;
FIG. 3 is a flowchart of a neural architecture search method according to another example embodiment of this application;
FIG. 4 is a diagram of a hybrid neural network model including a CNN structure and a transformer structure according to an example embodiment of this application;
FIG. 5 is a diagram of search space of a super-network according to an example embodiment of this application;
FIG. 6 is a flowchart of a neural architecture search method according to another example embodiment of this application;
FIG. 7 is a block diagram of a neural architecture search apparatus according to an example embodiment of this application;
FIG. 8 is a diagram of a structure of a computing device cluster according to an example embodiment of this application; and
FIG. 9 is a diagram of a connection manner of a computing device cluster according to an example embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in ratio unless otherwise specified.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

First, some terms in embodiments of this application are described.
1. Super-network: a network set including a plurality of independent neural network models. All neural network models in the super-network share respective model architecture parameters, where the model architecture parameter is a part of model architecture parameters specified in all model architecture parameters of the neural network model.
2. Search space: space including a to-be-searched neural network model in a neural architecture search process. Search space of the super-network indicates that some neural network models in the super-network are to-be-searched neural network models. In other words, a plurality of neural network models indicated by the search space are a subset of the super-network. Optionally, an indication manner of the search space is not limited in embodiments of this application. For example, the search space includes the plurality of indicated neural network models. For another example, the search space includes a search rule, and the search rule indicates the plurality of neural network models.
3. CNN: a deep neural network with a convolutional structure. The CNN includes a feature extractor including a convolutional layer and a sub-sampling layer. The feature extractor may be considered as a filter. A convolution process may be considered as performing convolution by using a trainable filter and an input image or a convolutional feature map (English: feature map). The convolutional layer is a neuron layer that is in the CNN and at which convolution processing is performed on an input signal. In the convolutional layer of the CNN, one neuron may be connected only to some adjacent-layer neurons. One convolutional layer usually includes several feature maps, and each feature map may include some neural units that are in a rectangular arrangement. Neural units in a same feature map share a weight, and the shared weight herein is a convolution kernel. Weight sharing may be understood as that an image information extraction manner is irrelevant to a location. A principle implied herein is that statistical information of a part of an image is the same as that of the other part of the image. This means that image information learned in the part can also be used in the other part. Therefore, image information obtained through same learning can be used for all locations on the image. At a same convolutional layer, a plurality of convolution kernels may be used to extract different image information. Usually, a larger quantity of convolution kernels indicates richer image information reflected in a convolution operation.
   The convolution kernel may be initialized in a form of a random-size matrix. In a training process of the CNN, the convolution kernel may obtain a reasonable weight through learning. In addition, benefits directly brought by weight sharing are that connections between layers of the CNN are reduced, and an overfitting risk is reduced.
4. Back propagation (back propagation, BP) algorithm: A CNN may correct a value of a parameter in an initial super-resolution model in a training process by using an error back propagation algorithm, so that a reconstruction error loss of a super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

In a related technology, most methods focus on model architecture search at a single model size and model scale. However, different neural network models have different advantages at different model scales. Therefore, the foregoing methods cannot resolve inconsistency of structures at different model scales. In addition, in different application scenarios, available computing resources vary greatly, and models that can be deployed are also different. Different models need to be pre-trained separately. The model has very poor reusability, and computing resources are extremely wasted.

According to a neural architecture search method for a hybrid neural network architecture (for example, CNN+transformer) provided in embodiments of this application, the foregoing problems of inconsistency and the waste of computing resources can be well resolved. An ideal hybrid neural network architecture can be found at different model scales such as a small model (for example, with a high CNN parameter ratio) and a large model (for example, with a high transformer parameter ratio), and efficiency and reliability can be maintained. In addition, in embodiments of this application, after selection is performed based on downstream hardware and target constraints, for example, a parameter quantity and a calculation amount, that are defined during deployment, an optimal neural network model can be determined through fast pre-training, and there is no need to train various networks from scratch before the optimal model is selected. Hardware resources consumed during the entire training are far less than hardware resources required for random initialization training of various sub-models in various scenarios.

The following describes application scenarios in this application.

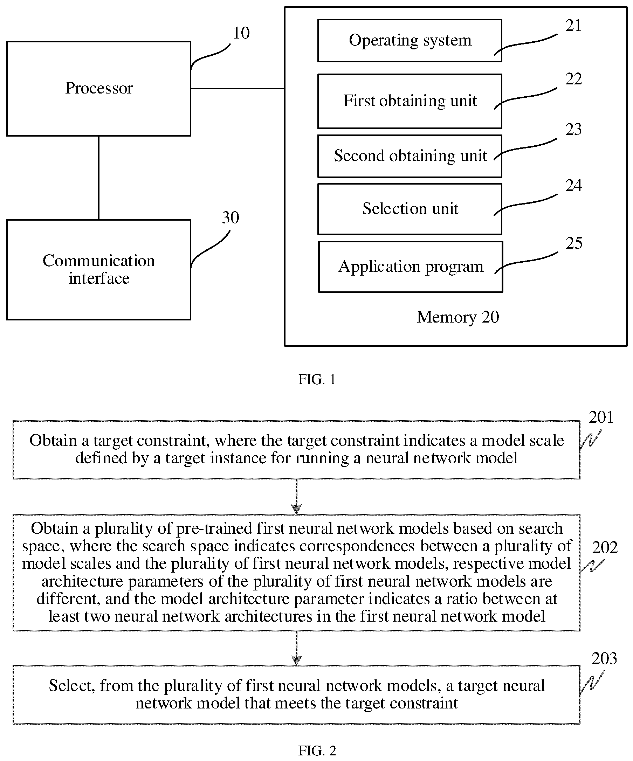

Embodiments of this application provide a neural architecture search method that is performed by a computing device. FIG. 1 is a diagram of a structure of a computing device according to an example embodiment of this application.

The computing device may be a terminal or a server. The terminal includes a mobile terminal or a fixed terminal. For example, the terminal may be a mobile phone, a tablet computer, a laptop portable computer, a desktop computer, and the like. The server may be one server, a server cluster including several servers, or a cloud computing service center.

Optionally, a computing device in a model training phase is the server, for example, a server including eight GPUs. In this embodiment of this application, hundreds of thousands of neural network models are pre-trained at a time via a fixed large network and a flexible dynamic super-network.

Optionally, in a model inference phase, neural architecture search may be performed on computing devices of various computing power sizes based on a user requirement. The computing device is the terminal or the server.

As shown in FIG. 1, the computing device includes a processor 10, a memory 20, and a communication interface 30. A person skilled in the art may understand that the structure shown in FIG. 1 does not constitute a limitation on the computing device, and the computing device may include more or fewer components than those shown in the figure, or may combine some components, or may have a different component arrangement.

The processor 10 is a control center of the computing device, and is connected to all parts of the entire computing device through various interfaces and lines. The processor 10 performs various functions of the computing device and processes data by running or executing a software program and/or a module stored in the memory 20 and invoking data stored in the memory 20. In this way, overall control is performed on the computing device. The processor 10 may be implemented by a CPU, or may be implemented by a graphics processing unit (Graphics Processing Unit, GPU).

The memory 20 may be configured to store the software program and the module. The processor 10 runs the software program and the module stored in the memory 20, to execute various function applications and process data. The memory 20 may mainly include a program storage area and a data storage area. The program storage area may store an operating system 21, a first obtaining unit 22, a second obtaining unit 23, a selection unit 24, an application program 25 (for example, neural network training) required by at least one function, and the like. The data storage area may store data created based on use of the computing device, and the like. The memory 20 may be implemented by any type of volatile or non-volatile storage device or a combination thereof, such as a static random access memory (Static Random Access Memory, SRAM), an electrically erasable programmable read-only memory (Electrically Erasable Programmable Read-Only Memory, EEPROM), an erasable programmable read-only memory (Erasable Programmable Read-Only Memory, EPROM), a programmable read-only memory (Programmable Read-Only Memory, PROM), a read-only memory (Read-Only Memory, ROM), a magnetic memory, a flash memory, a magnetic disk, or an optical disc. Correspondingly, the memory 20 may further include a memory controller, to provide the processor 10 with access to the memory 20.

The processor 10 performs the following function by running the first obtaining unit 22: obtaining a target constraint, where the target constraint indicates a model scale defined by a target instance for running a neural network model. The processor 10 performs the following function by running the second obtaining unit 23: obtaining a plurality of pre-trained first neural network models based on search space, where the search space indicates correspondences between a plurality of model scales and a plurality of first neural network models, respective model architecture parameters of the plurality of first neural network models are different, and the model architecture parameter indicates a ratio between at least two neural network architectures in the first neural network model. The processor 10 performs the following function by running the selection unit 24: selecting, from the plurality of first neural network models, a target neural network model that meets the target constraint.

It should be noted that the neural architecture search method provided in embodiments of this application may be applied to a plurality of application scenarios. The following describes several example application scenarios of the technical solutions of this application.

A possible application scenario is an album management system. A user stores a large quantity of images in an album of a mobile phone, and expects to classify and manage the images in the album. For example, the user expects that the mobile phone can automatically group all bird images together and group all person photos together. In this application scenario, the technical solution provided in this application may be used to find, based on a mobile phone computing resource of the user, an image classification model that matches the mobile phone computing resource. In this way, the image classification model is run on the mobile phone, so that different categories of images in the album of the mobile phone can be classified and managed, thereby facilitating search by the user, reducing management time of the user, and improving album management efficiency. In other words, a target constraint includes the mobile phone computing resource, and a target neural network model is the image classification model.

Another possible application scenario is target detection and segmentation. In autonomous driving, it is critical to make a safe driving decision about a vehicle by detecting and segmenting a target such as a pedestrian or a vehicle on a street. In this application scenario, the technical solution provided in this application may be used to find, based on a vehicle computing resource, a target detection and segmentation model that matches the vehicle computing resource. In this way, the target detection and segmentation model having a model architecture is run on the vehicle, so that accurate detection, positioning, and segmentation can be performed on a target in an image collected by the vehicle. In other words, a target constraint includes the vehicle computing resource, and a target neural network model is the target detection and segmentation model.

The following describes, by using several example embodiments, the neural architecture search method provided in embodiments of this application.

FIG. 2 is a flowchart of a neural architecture search method according to an example embodiment of this application. In this embodiment, an example in which the method is applied to the computing device shown in FIG. 1 is used for description. The method includes the following several steps.

Step 201: Obtain a target constraint, where the target constraint indicates a model scale defined by a target instance for running a neural network model.

Optionally, the computing device obtains the target constraint, where the target constraint indicates the model scale defined by the target instance for running the neural network model.

Optionally, the target instance is a physical instance or a virtual instance. For example, the physical instance may be a physical machine, and the virtual instance may be a virtual machine, a container, or a bare metal server. The virtual machine may also be referred to as a cloud server (Elastic Compute Service, ECS) or an elastic instance. This is not limited in this embodiment of this application.

Optionally, the target instance and the computing device are a same device or two different devices. For example, the computing device is a server, and the target instance is a terminal. For another example, the computing device and the target instance are a same terminal.

Optionally, the target constraint includes a constraint of a resource provided by the target instance for running the neural network model, and the resource includes a computing resource and/or a storage resource of the target instance.

Optionally, the target constraint includes defined model scale information, and the model scale information includes model parameter information and model calculation information. For example, the target constraint includes floating-point operations per second (Floating-Point Operations per Second, FLOPS), a model parameter quantity, or a maximum memory limit of a model.

Step 202: Obtain a plurality of pre-trained first neural network models based on search space, where the search space indicates correspondences between a plurality of model scales and a plurality of first neural network models, respective model architecture parameters of the plurality of first neural network models are different, and the model architecture parameter indicates a ratio between at least two neural network architectures in the first neural network model.

Optionally, the computing device pre-trains the plurality of first neural network models. In a possible implementation, when the computing device is the terminal, the terminal obtains the plurality of trained first neural network models stored in the terminal, or obtains the plurality of trained first neural network models from the server. In another possible implementation, when the computing device is the server, the server obtains the plurality of trained first neural network models stored in the server.

Optionally, the computing device pre-constructs the search space, where the search space indicates the correspondences between the plurality of model scales and the plurality of first neural network models. In other words, the search space indicates correspondences between the plurality of model scales and a plurality of model architecture parameters, and the model architecture parameter includes parameters respectively corresponding to the at least two neural network architectures and/or a parameter quantity ratio between the at least two neural network architectures.

Optionally, the correspondences that are between the plurality of model scales and the plurality of first neural network models and that are indicated by the search space includes a one-to-many correspondence between the plurality of model scales and the plurality of first neural network models, in other words, each model scale corresponds to one hybrid neural network model set, and the hybrid neural network set includes at least two first neural network models.

For example, in the plurality of model scales, there is no intersection set between hybrid neural network model sets respectively corresponding to any two model scales. Alternatively, in the plurality of model scales, there is no intersection set between hybrid neural network model sets respectively corresponding to at least two model scales.

Optionally, the computing device obtains the search space of a super-network. The super-network includes a plurality of neural network models that share respective model architecture parameters, where the search space further indicates that some neural network models in the super-network are the plurality of first neural network models. In a possible implementation, the search space includes the plurality of first neural network models. In another possible implementation, the search space includes a search rule. The search rule indicates that some neural network models in the super-network are the plurality of first neural network models.

Optionally, the first neural network model is a model obtained by training a hybrid neural network architecture by using a sample image and correct result information. The correct result information is pre-annotated correct result information corresponding to a sample digital image.

The first neural network model is a recurrent neural network model for recognizing result information in an image.

The first neural network model is used to convert an input image into the result information. The first neural network model represents a correlation between the image and the result information.

The first neural network model is a preset mathematical model, and a fault detection model includes a model coefficient between the image and the result information. The model coefficient may be a fixed value, may be a value dynamically modified with time, or may be a value dynamically modified with an application scenario.

Optionally, the result information is any one of classification result information, detection result information, and segmentation result information. This is not limited in this embodiment of this application.

The first neural network model is a hybrid neural network model including at least two neural network architectures. Optionally, the first neural network model is a hybrid neural network model including two neural network architectures. For example, the first neural network model is a hybrid neural network model including a CNN structure and a transformer structure. For another example, the first neural network model is a hybrid neural network model including a graph convolutional networks (Graph Convolutional Networks, GCN) structure and a transformer structure. This is not limited in this embodiment of this application.

Optionally, types of hybrid neural network architectures included in the plurality of first neural network models are the same. For example, each of the plurality of first neural network models is a hybrid neural network model including a CNN structure and a transformer structure.

Optionally, types of hybrid neural network architectures of at least two of the plurality of first neural network models are different, and/or model architecture parameters respectively corresponding to any two first neural network models are different.

For example, at least one of the plurality of first neural network models is a hybrid neural network model including a CNN structure and a transformer structure, and at least one of the plurality of first neural network models is a hybrid neural network model including a GCN structure and a transformer structure.

Optionally, when the types of the hybrid neural network architectures included in the plurality of first neural network models are the same, model architecture parameters respectively corresponding to any two first neural network models are different. A model architecture parameter corresponding to a first neural network model is parameters respectively corresponding to at least two neural network architectures included in the first neural network model and/or a parameter quantity ratio between the at least two neural network architectures. In other words, the plurality of first neural network models are a plurality of hybrid neural network models having different model architecture parameters.

Step 203: Select, from the plurality of first neural network models, a target neural network model that meets the target constraint.

Optionally, the computing device determines, as the target neural network model based on the correspondences that are between the plurality of model scales and the plurality of first neural network models and that are indicated by the search space, a first neural network model corresponding to the model scale indicated by the target constraint. The target neural network model is one of the plurality of first neural network models.

The target neural network model is a to-be-run neural network model that meets the target constraint, the target neural network model is a hybrid neural network model including at least two neural network architectures, and the target neural network model indicates a ratio between the at least two included neural network architectures.

Optionally, the target neural network model includes two neural network architectures. For example, the two neural network architectures are a CNN structure and a transformer structure.

Optionally, that the computing device selects, from the plurality of first neural network models, the target neural network model that meets the target constraint includes: The computing device selects, from the plurality of first neural network models, at least two second neural network models that meet the target constraint; trains the at least two second neural network models in a target dataset corresponding to a target task, to obtain evaluation parameters respectively corresponding to the at least two second neural network models, where the evaluation parameter indicates a matching degree between the second neural network model and the target task; and determines the target neural network model based on the evaluation parameters respectively corresponding to the at least two second neural network models.

Optionally, the target task is a to-be-processed migration downstream task. The target task includes one of a classification task, a detection task, and a segmentation task. It should be noted that the target task may alternatively be another type of task. This is not limited in this embodiment of this application.

Optionally, the target dataset is a dataset for deploying the target task. For example, a downstream migration dataset is a PASCAL VOC dataset, a COCO dataset, or a Pets dataset.

Optionally, the computing device randomly samples K second neural network models from the at least two selected second neural network models, and trains the K second neural network models in the downstream migration dataset, to obtain evaluation parameters respectively corresponding to the K second neural network models. The target neural network model is determined based on the evaluation parameters respectively corresponding to the K second neural network models, where K is a positive integer greater than 1.

Optionally, the evaluation parameter is a precision value of an evaluation indicator. That the computing device determines the target neural network model based on the evaluation parameters respectively corresponding to the at least two second neural network models includes: determining a second neural network model with a highest precision value as the target neural network model based on precision values of evaluation indicators respectively corresponding to the at least two second neural network models.

For example, the evaluation indicator is a mean AP (Mean Average Precision, mAP) value or Top1. This is not limited in this embodiment of this application.

In conclusion, in this embodiment of this application, the plurality of hybrid neural network models, that is, the plurality of first neural network models, are pre-trained. The respective model architecture parameters of the plurality of first neural network models are different, and the model architecture parameter indicates the ratio between the at least two neural network architectures in the first neural network model, so that under the target constraint of the defined model scale, the target neural network model that meets the current target constraint can be automatically found from the plurality of first neural network models, that is, an ideal hybrid neural network architecture and a ratio between at least two hybrid neural network architectures are found, to improve a neural architecture search effect.

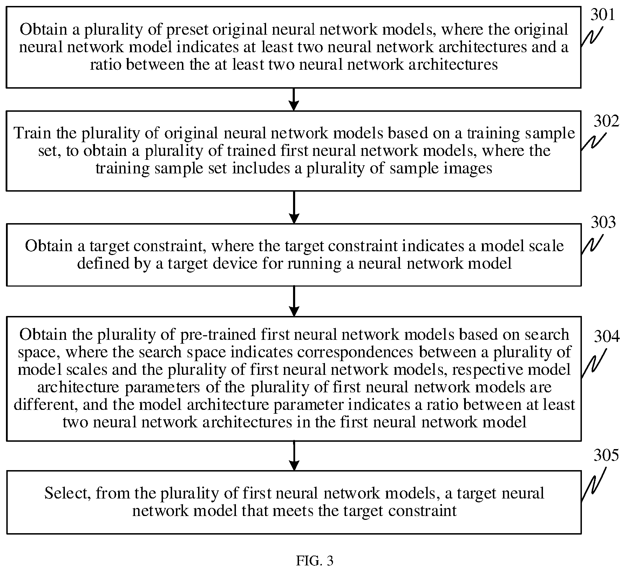

FIG. 3 is a flowchart of a neural architecture search method according to another example embodiment of this application. For ease of description, in this embodiment, an example in which both a model training process and a model application process related to the method are applied to the computing device shown in FIG. 1 is used for description. The method includes the following several steps.

Step 301: Obtain a plurality of preset original neural network models, where the original neural network model indicates at least two neural network architectures and a ratio between the at least two neural network architectures.

The computing device obtains the plurality of preset original neural network models. The original neural network model is a hybrid neural network model including at least two neural network architectures. Optionally, the original neural network model is a hybrid neural network model including two neural network architectures. For example, the original neural network model is a hybrid neural network model including a CNN structure and a transformer structure. For another example, the original neural network model is a hybrid neural network model including a GCN structure and a transformer structure. This is not limited in this embodiment of this application.

Step 302: Train the plurality of original neural network models based on a training sample set, to obtain a plurality of trained first neural network models, where the training sample set includes a plurality of sample images.

Optionally, the computing device obtains the training sample set, where the training sample set includes the plurality of sample images. The computing device preprocesses each sample image in the training sample set to obtain a preprocessed sample image, and trains the plurality of original neural network models based on a plurality of preprocessed sample images, to obtain the plurality of trained first neural network models.

Optionally, preprocessing includes at least one of normalization processing, cropping processing (including randomly cropping to a unified size, for example, 224×224), and data enhancement processing. The data enhancement processing includes at least one of flipping, random erasing, and random automatic enhancement. This is not limited in this embodiment of this application.

Optionally, the computing device determines a sampled model from the plurality of original neural network models based on a preset sampling periodicity; and for at least one sample image in the training sample set, trains, based on the at least one sample image, the currently determined sampled model to obtain a corresponding first neural network model.

Optionally, the computing device inputs the plurality of preprocessed sample images into the sampled model in batches for training. The sampled model is a model determined from the plurality of original neural network models based on the preset sampling periodicity. For example, the sampled model is a model with a largest model scale in the plurality of original neural network models, a model with a smallest model scale in the plurality of original neural network models, or a model randomly determined from the plurality of original neural network models.

Optionally, that the computing device trains, based on the at least one sample image, the currently determined sampled model to obtain the corresponding first neural network model includes: invoking, based on the at least one sample image, the currently determined sampled model to perform forward propagation, calculating a loss function, performing training based on the loss function by using a back propagation algorithm and a preset optimizer, and obtaining the corresponding first neural network model through a plurality of times of iterative training, to be specific, finally obtaining trained first neural network models respectively corresponding to the plurality of original neural network models.

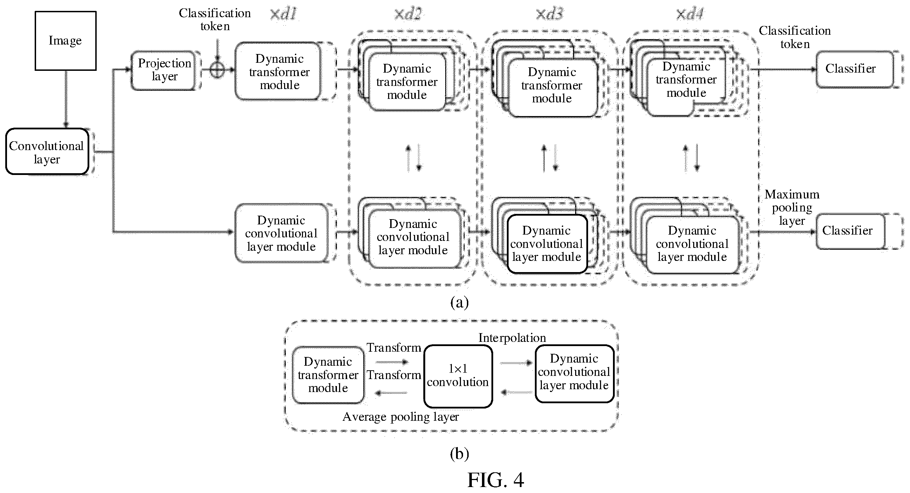

In an illustrative example, a diagram of the hybrid neural network model including the CNN structure and the transformer structure is shown in FIG. 4. The hybrid neural network model includes a dual-branch network structure: the CNN structure and the transformer structure. A dynamic convolutional layer module is used in the CNN structure, and the dynamic convolutional layer module includes a dynamic convolution operator with a variable width. A dynamic transformer module is used in the transformer structure, and the dynamic transformer module includes at least one parameter of a variable width and a quantity of heads (English: heads). d1, d2, d3, and d4 respectively represent quantities of network layers in four phases, and d1, d2, d3, and d4 also dynamically change in a model training process. For example, a value of d1 is 4 or 5, a value of d2 is 4 or 5, a value of d3 is 3 or 4, and a value of d4 is 1. A sum of the quantities of network layers in the four phases d1+d2+d3+d4 is d-model. A value of d-model ranges from 12 to 15.

Step 303: Obtain a target constraint, where the target constraint indicates a model scale defined by a target instance for running a neural network model.

The computing device obtains the target constraint, where the target constraint indicates the model scale defined by the target instance for running the neural network model.

Step 304: Obtain the plurality of pre-trained first neural network models based on search space, where the search space indicates correspondences between a plurality of model scales and a plurality of first neural network models, respective model architecture parameters of the plurality of first neural network models are different, and the model architecture parameter indicates a ratio between at least two neural network architectures in the first neural network model.

The computing device obtains the search space of a super-network, and obtains the plurality of first neural network models indicated by the search space, where the search space indicates the correspondences between the plurality of model scales and the plurality of first neural network models, the respective model architecture parameters of the plurality of first neural network models are different, and the model architecture parameter indicates the ratio between the at least two neural network architectures in the first neural network model.

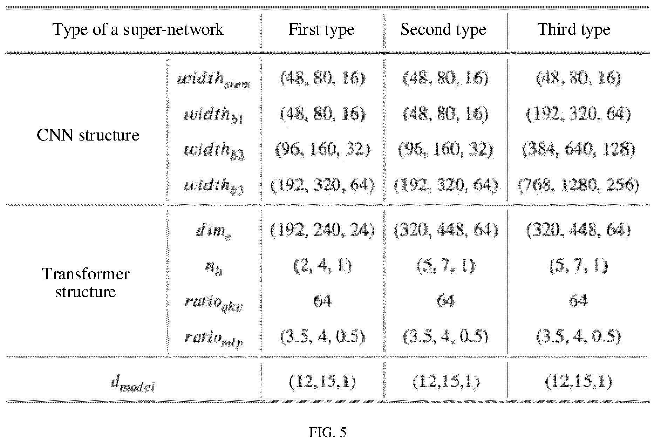

In an illustrative example, based on the hybrid neural network model that includes the CNN structure and the transformer structure and that is provided in FIG. 4, a diagram of the search space of the super-network is shown in FIG. 5. Values of each triplet respectively represent a start point, an end point, and a step of sampling in this dimension. In each iterative process of a training process, the network randomly samples an architecture parameter from the table, constructs an architecture, and then trains the architecture. During testing, model architecture search is also performed based on search space specified according to the table. A widthₛₜₑₘ corresponds to a quantity of output channels of convolution of the convolutional layer in FIG. 4. A width_{b1} is a quantity of output channels of a network corresponding to d1. A width_{b2} is a quantity of output channels of a network corresponding to d2. A width_{b3} is a quantity of output channels of a network corresponding to d3, or is also referred to as a quantity of output channels of a network corresponding to d4, where the quantity of output channels of the network corresponding to d3 is the same as the quantity of output channels of the network corresponding to d4. A dimₑ is a quantity of feature channels at a self-attention layer. nₕ is a quantity of attention heads at the self-attention layer. A ratio_{qkv} is a feature dimension ratio of a matrix q, k, and v at the self-attention layer, that is, a feature dimension of the matrix q, k, and v=n-h*ratio_{qkv}. A ratioₘₗₚ is a hidden feature dimension ratio at a multilayer perceptron (Multilayer Perceptron, MLP) layer, that is, a hidden feature dimension at the MLP layer is dimₑ*ratioₘₗₚ. d_{model} is a quantity of blocks in the transformer structure. For example, based on a definition of a size of the super-network, a first type of a super-network is also referred to as an ultra-small super-network, and a parameter quantity ranges from 5.5 M to 13.5 M. A second type of a super-network is also referred to as a small super-network, and a parameter quantity ranges from 15.1 M to 39.9 M. A third type of a super-network is also referred to as a basic super-network, and a parameter quantity ranges from 23.2 M to 66.2 M. This is not limited in this embodiment of this application.

Step 305: Select, from the plurality of first neural network models, a target neural network model that meets the target constraint.

The computing device selects, from the plurality of first neural network models, the target neural network model that meets the target constraint. It should be noted that, for related details of step 303 to step 305, refer to the related descriptions in the foregoing embodiment. Details are not described herein again.

In conclusion, in this embodiment of this application, the search space is constructed. The search space indicates the correspondences between the plurality of model scales and the plurality of first neural network models. The plurality of first neural network models are hybrid neural network models with different ratios. An ideal model, that is, the target neural network model that meets the target constraint, can be found at different model scales. A model training policy is constructed. This can greatly improve model training efficiency and subsequent network search efficiency. The neural architecture search method provided in this embodiment of this application may be applied to a public cloud/hybrid cloud/private cloud, providing intelligent and efficient neural architecture search and production capabilities and performing deployment. The neural architecture search method provided in this embodiment of this application may relate to various downstream tasks such as various types of classification, detection, and segmentation.

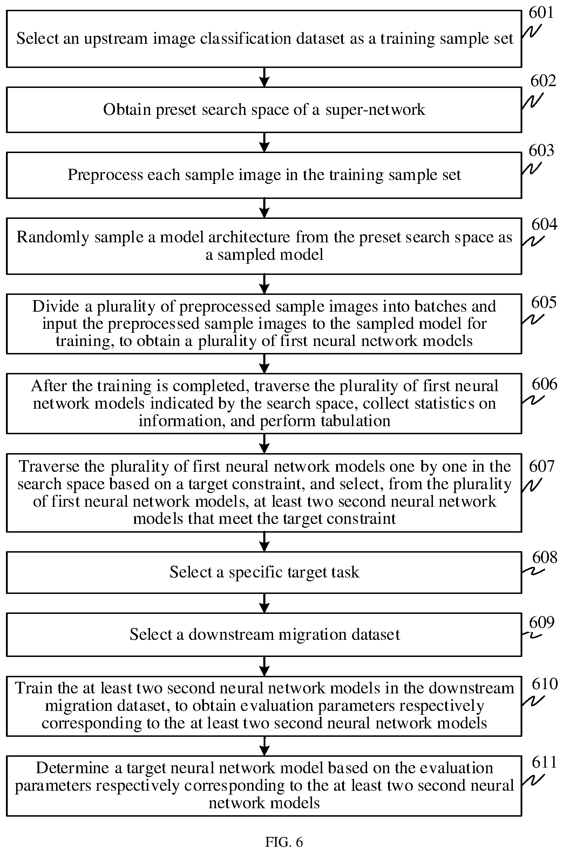

FIG. 6 is a flowchart of a neural architecture search method according to another example embodiment of this application. In this embodiment, an example in which the method is applied to the computing device shown in FIG. 1 is used for description. The method includes the following several steps.

Step 601: Select an upstream image classification dataset as a training sample set.

Step 602: Obtain preset search space of a super-network, where
the super-network includes a plurality of neural network models that share respective model architecture parameters, and the search space indicates that some neural network models in the super-network are a plurality of first neural network models.

Step 603: Preprocess each sample image in the training sample set.

Optionally, each sample image in the training sample set is normalized and randomly cropped to a unified size, and then undergoes data enhancement processing such as flipping, random erasing, and random automatic enhancement.

Step 604: Randomly sample a model architecture from the preset search space as a sampled model.

Optionally, before each batch of sample images is input to the super-network, the model architecture is randomly sampled from the preset search space. The following is a sampling method. Structure-type sampling is performed by using T as a periodicity, and a model with a largest model scale, a model with a smallest model scale, and (T-2) randomly sampled models in the search space are separately collected in a preset sampling periodicity.

Step 605: Divide a plurality of preprocessed sample images into batches and input the preprocessed sample images to the sampled model for training, to obtain the plurality of first neural network models.

Optionally, the plurality of preprocessed sample images are divided into batches (for example, 256 images) and input to the sampled model in step S605 for forward propagation, and a cross-entropy loss function is calculated. A back propagation algorithm and a preset optimizer (for example, an AdamW optimizer) are used to reduce the loss function for training the model, and a final first neural network model is obtained through a plurality of times of iterative training.

Step 606: After the training is completed, traverse the plurality of first neural network models indicated by the search space, collect statistics on information, and perform tabulation.

Optionally, the statistics on the information includes statistics on at least one of the following information: FLOPS, a parameter quantity, and a maximum memory limit. That the foregoing steps are completed indicates that upstream construction is completed. The computing device may subsequently perform architecture search and customization based on a downstream scenario (for example, data or a model size).

Step 607: Traverse the plurality of first neural network models one by one in the search space based on a target constraint, and select, from the plurality of first neural network models, at least two second neural network models that meet the target constraint.

Step 608: Select a specific target task.

A migration downstream task is the foregoing target task.

Step 609: Select a downstream migration dataset.

The downstream migration dataset is the foregoing target dataset, and is a dataset for deploying the migration downstream task.

Step 610: Train the at least two second neural network models in the downstream migration dataset, to obtain evaluation parameters respectively corresponding to the at least two second neural network models.

Optionally, the evaluation parameter is a precision value of an evaluation indicator. For example, the evaluation indicator is a mean AP (Mean Average Precision, mAP) value or Top1. This is not limited in this embodiment of this application.

Step 611: Determine a target neural network model based on the evaluation parameters respectively corresponding to the at least two second neural network models.

Optionally, K second neural network models are randomly sampled from the at least two selected second neural network models, and the K second neural network models are trained in the downstream migration dataset, to obtain precision values of the evaluation indicators respectively corresponding to the K second neural network models. A second neural network model with a highest precision value is determined as the target neural network model.

In conclusion, the plurality of first neural network models in this embodiment of this application are hybrid neural network models each including at least two neural network architectures, and the search space of the super-network is constructed based on the plurality of first neural network models. The search space relates to parameter quantity ratios of at least two neural network architectures at different layers, so that a model can have good local feature extraction and global modeling capabilities to a maximum extent. In addition, according to the neural architecture search method provided in this embodiment of this application, a problem of model architecture inconsistency in a related technology is resolved, so that a target neural network model with an optimal accuracy-parameter quantity equalization ratio can be obtained at a plurality of model scales.

Apparatus embodiments of this application are provided below, and may be configured to perform the method embodiments of this application. For details not disclosed in the apparatus embodiments of this application, refer to the method embodiments of this application.

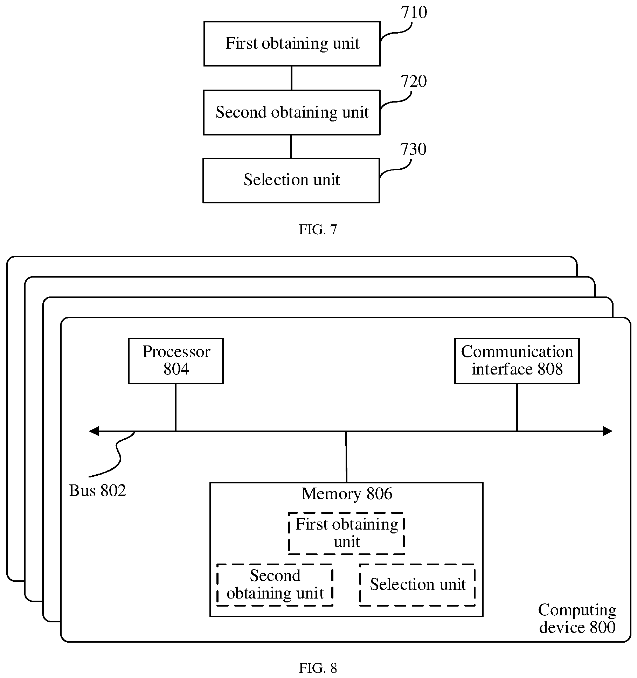

FIG. 7 is a block diagram of a neural architecture search apparatus according to an example embodiment of this application. The apparatus may be implemented as an entirety or a part of a computing device by using software, hardware, or a combination thereof. The apparatus may include a first obtaining unit 710, a second obtaining unit 720, and a selection unit 730.

The first obtaining unit 710 is configured to obtain a target constraint, where the target constraint indicates a model scale defined by a target instance for running a neural network model.

The second obtaining unit 720 is configured to obtain a plurality of pre-trained first neural network models based on search space, where the search space indicates correspondences between a plurality of model scales and a plurality of first neural network models, respective model architecture parameters of the plurality of first neural network models are different, and the model architecture parameter indicates a ratio between at least two neural network architectures in the first neural network model.

The selection unit 730 is configured to select, from the plurality of first neural network models, a target neural network model that meets the target constraint.

In a possible implementation, the selection unit 730 is further configured to:
select, from the plurality of first neural network models, at least two second neural network models that meet the target constraint;
train the at least two second neural network models in a target dataset corresponding to a target task, to obtain evaluation parameters respectively corresponding to the at least two second neural network models, where the evaluation parameter indicates a matching degree between the second neural network model and the target task; and
determine the target neural network model based on the evaluation parameters respectively corresponding to the at least two second neural network models.

In another possible implementation, the apparatus further includes a third obtaining unit.

The third obtaining unit is configured to obtain the search space of a super-network, where the super-network includes a plurality of neural network models that share respective model architecture parameters, and the search space further indicates that some neural network models in the super-network are the plurality of first neural network models.

In another possible implementation, the at least two neural network architectures include a convolutional neural network CNN structure and a transformer structure.

In another possible implementation, the apparatus further includes a model training unit. The model training unit is configured to:
obtain a plurality of preset original neural network models, where the original neural network model indicates at least two neural network architectures and a ratio between the at least two neural network architectures; and
train the plurality of original neural network models based on a training sample set, to obtain the plurality of trained first neural network models, where the training sample set includes a plurality of sample images.

In another possible implementation, the model training unit is configured to:
determine a sampled model from the plurality of original neural network models based on a preset sampling periodicity; and
for at least one sample image in the training sample set, train, based on the at least one sample image, the currently determined sampled model to obtain a corresponding first neural network model.

In another possible implementation, the sampled model is a model with a largest model scale in the plurality of original neural network models, a model with a smallest model scale in the plurality of original neural network models, or a model randomly determined from the plurality of original neural network models.

It should be noted that, when the apparatus provided in the foregoing embodiment implements the functions of the apparatus, division of the foregoing functional modules is only used as an example for description. In actual application, the foregoing functions may be allocated to different functional modules for implementation as required, that is, an inner structure of a device is divided into different functional modules, to implement all or some of the functions described above. In addition, the apparatus provided in the foregoing embodiment and the method embodiments belong to a same concept. For specific implementation processes thereof, refer to the method embodiments. Details are not described herein.

An embodiment of this application provides a neural architecture search apparatus. The apparatus includes a processor and a memory configured to store instructions executable by the processor. When executing the instructions, the processor is configured to implement the foregoing method performed by the computing device.

An embodiment of this application provides a computer program product, including computer-readable code or a non-volatile computer-readable storage medium carrying the computer-readable code. When the computer-readable code is run in a processor of a computing device, the processor in the computing device performs the foregoing method performed by the computing device.

An embodiment of this application provides a non-volatile computer-readable storage medium. The non-volatile computer-readable storage medium stores computer program instructions. When the computer program instructions are executed by a processor, the foregoing method performed by the computing device is implemented.

An embodiment of this application further provides a computing device cluster. As shown in FIG. 8, the computing device cluster includes at least one computing device 800. The computing device 800 includes a bus 802, a processor 804, a memory 806, and a communication interface 808. The processor 804, the memory 806, and the communication interface 808 communicate with each other through the bus 802. The computing device 800 may be a server, for example, a central server, an edge server, or a local server in a local data center. In some embodiments, the computing device 800 may alternatively be a terminal device such as a desktop computer, a notebook computer, or a smartphone. The memory 806 in the one or more computing devices 800 in the computing device cluster may store same instructions used to perform a neural architecture search method.

In some possible implementations, the memory 806 in the one or more computing devices 800 in the computing device cluster may alternatively separately store some instructions used to perform a neural architecture search method. In other words, a combination of the one or more computing devices 800 may jointly execute instructions used to perform the neural architecture search method.

It should be noted that memories 806 in different computing devices 800 in the computing device cluster may store different instructions, and the different instructions are respectively used to perform some functions of a neural architecture search apparatus. In other words, the instructions stored in the memories 806 in different computing devices 800 may implement functions of one or more of a first obtaining unit, a second obtaining unit, and a selection unit.

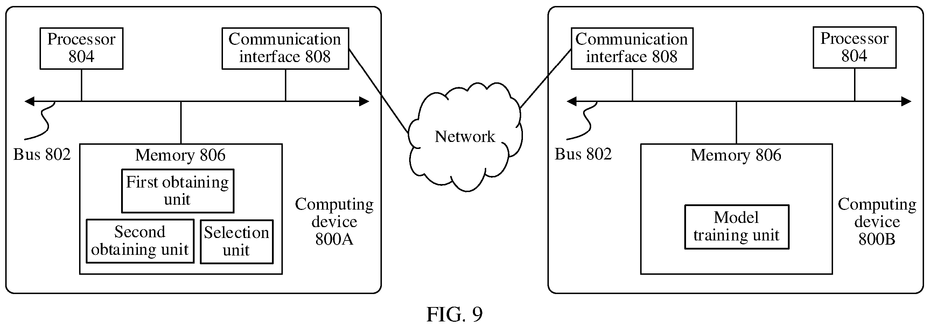

In some possible implementations, the one or more computing devices in the computing device cluster may be connected via a network. The network may be a wide area network, a local area network, or the like. FIG. 9 shows a possible implementation. As shown in FIG. 9, two computing devices 800A and 800B are connected via a network. Specifically, each computing device is connected to the network through a communication interface of the computing device. In this type of possible implementation, a memory 806 in the computing device 800A stores instructions for performing functions of a first obtaining unit, a second obtaining unit, and a selection unit. In addition, a memory 806 in the computing device 800B stores instructions for performing functions of a model training unit.

A connection manner of the computing device cluster shown in FIG. 9 may be that in consideration of a requirement of the neural architecture search method provided in this application for training of a large quantity of hybrid neural network models and storage of a plurality of trained first neural network models, it is considered that the functions implemented by the model training unit are performed by the computing device 800B.

It should be understood that functions of the computing device 800A shown in FIG. 9 may also be completed by a plurality of computing devices 800. Similarly, functions of the computing device 800B may also be completed by a plurality of computing devices 800.

An embodiment of this application further provides a computing device cluster, including at least one computing device. Each computing device includes a processor and a memory. The processor of the at least one computing device is configured to execute instructions stored in the memory of the at least one computing device, to enable the computing device cluster to perform the foregoing method performed by the computing device.

An embodiment of this application further provides a computer program product including instructions. When the instructions are run by a computing device cluster, the computing device cluster is enabled to perform the foregoing method performed by the computing device.

An embodiment of this application further provides a computer-readable storage medium, including computer program instructions. When the computer program instructions are executed by a computing device cluster, the computing device cluster performs the foregoing method performed by the computing device.

The computer-readable storage medium can be a tangible device that can retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination of the foregoing. More specific examples (non-exhaustive list) of the computer-readable storage medium include: a portable computer disk, a hard disk drive, a random access memory (Random Access Memory, RAM), a read-only memory (Read-Only Memory, ROM), an erasable programmable read-only memory (Electrically Programmable Read-Only Memory, EPROM, or flash memory), a static random access memory (Static Random Access Memory, SRAM), a portable compact disk read-only memory (Compact Disc Read-Only Memory, CD-ROM), a digital video disk (Digital Video Disc, DVD), a memory stick, a floppy disk, a mechanical coding device, for example, a punching card or a groove protrusion structure that stores instructions, and any suitable combination of the foregoing.

Computer-readable program instructions or code described herein can be downloaded to each computing/processing device from the computer-readable storage medium, or downloaded to an external computer or external storage device via a network, such as the Internet, a local area network, a wide area network and/or a wireless network. The network may include a copper transmission cable, optical fiber transmission, wireless transmission, a router, a firewall, a switch, a gateway computer and/or an edge server. A network adapter card or a network interface in each computing/processing device receives the computer-readable program instructions from the network, and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in one or any combination of a plurality of programming languages. The programming languages include an object-oriented programming language such as Smalltalk and C++, and a conventional procedural programming language such as a "C" language or a similar programming language. The computer-readable program instructions may be executed entirely on a user computer, partly on the user computer, as a stand-alone software package, partly on the user computer and partly on a remote computer, or entirely on the remote computer or a server. In a case involving the remote computer, the remote computer may be connected to the user computer via any kind of network, including the local area network (Local Area Network, LAN) or the wide area network (Wide Area Network, WAN), or may be connected to the external computer (for example, connected via the Internet using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by using the computer-readable program instructions.

These computer-readable program instructions may be provided to a processor of a general-purpose computer, a dedicated computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device are used to implement the functions/actions specified in the one or more blocks in the flowcharts and/or block diagrams.

The flowcharts and block diagrams in the accompanying drawings show the system architecture, function, and operation of possible implementations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse sequence, depending on a function involved.

It should also be noted that, each block in the block diagrams and/or flowcharts, and a combination of blocks in the block diagrams and/or flowcharts may be implemented by hardware (for example, a circuit or an ASIC (Application-Specific Integrated Circuit, application-specific integrated circuit)) for performing a corresponding function or act, or may be implemented by a combination of hardware and software, for example, firmware.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprising (comprising)" does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a good effect.

The foregoing has described embodiments of this application. The foregoing descriptions are examples, not exhaustive, and are not limited to the disclosed embodiments. Many modifications and changes are apparent to a person of ordinary skill in the art without departing from the scope and spirit of the illustrated embodiments. The selection of terms used in this specification is intended to best explain the principles of embodiments, practical applications, or improvements to technologies in the market, or to enable another person of ordinary skill in the art to understand embodiments disclosed in this specification.

## Claims

1. A neural architecture search method, wherein the method comprises:
obtaining a target constraint, wherein the target constraint indicates a model scale defined by a target instance for running a neural network model;
obtaining a plurality of pre-trained first neural network models based on search space, wherein the search space indicates correspondences between a plurality of model scales and the plurality of first neural network models, respective model architecture parameters of the plurality of first neural network models are different, and the model architecture parameter indicates a ratio between at least two neural network architectures in the first neural network model; and
selecting, from the plurality of first neural network models, a target neural network model that meets the target constraint.

2. The method according to claim 1, wherein the selecting, from the plurality of first neural network models, a target neural network model that meets the target constraint comprises:
Selecting, from the plurality of first neural network models, at least two second neural network models that meet the target constraint;
training the at least two second neural network models in a target dataset corresponding to a target task, to obtain evaluation parameters respectively corresponding to the at least two second neural network models, wherein the evaluation parameter indicates a matching degree between the second neural network model and the target task; and
determining the target neural network model based on the evaluation parameters respectively corresponding to the at least two second neural network models.

3. The method according to claim 1 or 2, before the obtaining a plurality of pre-trained first neural network models based on search space, wherein the search space indicates correspondences between a plurality of model scales and the plurality of first neural network models, the method further comprises:
obtaining the search space of a super-network, wherein the super-network comprises a plurality of neural network models that share respective model architecture parameters, and the search space further indicates that some neural network models in the super-network are the plurality of first neural network models.

4. The method according to any one of claims 1 to 3, wherein the at least two neural network architectures comprise a convolutional neural network CNN structure and a transformer structure.

5. The method according to any one of claims 1 to 4, before the obtaining a plurality of pre-trained first neural network models based on search space, further comprising:
obtaining a plurality of preset original neural network models, wherein the original neural network model indicates the at least two neural network architectures and the ratio between the at least two neural network architectures; and
training the plurality of original neural network models based on a training sample set, to obtain the plurality of trained first neural network models, wherein the training sample set comprises a plurality of sample images.

6. The method according to claim 5, wherein the training the plurality of original neural network models based on a training sample set, to obtain the plurality of trained first neural network models comprises:
determining a sampled model from the plurality of original neural network models based on a preset sampling periodicity; and
for at least one sample image in the training sample set, training, based on the at least one sample image, the currently determined sampled model to obtain a corresponding first neural network model.

7. The method according to claim 6, wherein
the sampled model is a model with a largest model scale in the plurality of original neural network models, a model with a smallest model scale in the plurality of original neural network models, or a model randomly determined from the plurality of original neural network models.

8. A neural architecture search apparatus, wherein the apparatus comprises:
a processor; and
a memory, configured to store instructions executable by the processor, wherein
the processor is configured to implement the method according to any one of claims 1 to 7 when executing the instructions.

9. A neural architecture search apparatus, wherein the apparatus comprises:
a first obtaining unit, configured to obtain a target constraint, wherein the target constraint indicates a model scale defined by a target instance for running a neural network model;
a second obtaining unit, configured to obtain a plurality of pre-trained first neural network models based on search space, wherein the search space indicates correspondences between a plurality of model scales and the plurality of first neural network models, respective model architecture parameters of the plurality of first neural network models are different, and the model architecture parameter indicates a ratio between at least two neural network architectures in the first neural network model; and
a selection unit, configured to select, from the plurality of first neural network models, a target neural network model that meets the target constraint.

10. A non-volatile computer-readable storage medium, wherein the non-volatile computer-readable storage medium stores computer program instructions, and when the computer program instructions are executed by a processor, the method according to any one of claims 1 to 7 is implemented.

11. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 7.

12. A computer program product comprising instructions, wherein when the instructions are run by a computing device cluster, the computing device cluster is enabled to perform the method according to any one of claims 1 to 7.

13. A computer-readable storage medium, comprising computer program instructions, wherein when the computer program instructions are executed by a computing device cluster, the computing device cluster performs the method according to any one of claims 1 to 7.
